# EUROPEAN PATENT APPLICATION

(11) **EP 1 650 501 A1**
(43) Date of publication of application: **26.04.2006**
(21) Application number: 04077883.9
(22) Date of filing: 20.10.2004
(51) Int. Cl.: F23J 13/00

(54) **Condense receiving element**

(71) Applicant: Muelink & Grol Groep B.V., 9723 BP Groningen (NL)
(72) Inventor: Wagelaar, Michiel, 9761 GJ Eelde (NL); Mensink, Maarten, 9312 PD Nietap (NL)
(74) Representative: van Westenbrugge, Andries

(57) **Abstract**

The invention relates to a condensation collection element. This condensation collection element comprises a pipe-like part and at least three legs. Viewed in the axial direction, the condensation collection element has an upstream side and a downstream side. The pipe-like part has an external surface that tapers in the downstream direction. The at least three legs are provided at the upstream end of the pipe-like part and extend from the upstream end in the radial and upstream direction. The invention furthermore relates to a flue duct for venting combustion gases, comprising a lower pipe section, an upper pipe section and a condensation collection element fitted in a widening between the lower and upper pipe section. The invention also relates to a boiler for a heating system or hot water supply, in particular for domestic use, comprising a flue duct according to the invention that extends vertically. Finally, the invention relates to a building provided with a flue duct that is provided vertically.

## Description

The present invention relates to a condensation collection element for fitting in a flue duct for combustion gases, also referred to as flue gases.

In boilers for generating heat for a heating system or hot water supply, in particular for domestic use, it is known that condensation forms in the flue gases. This occurs in particular in systems where it is desired to make the maximum possible use of heat contained in the flue gases obtained by combustion of, usually, natural gas. The flue gases are therefore cooled. Condensation formation will take place more easily in the flue duct the further the flue gases are cooled. This is a known phenomenon. It is also known to provide such flue ducts with condensation collection means. EP 310 188 may be mentioned as an example.

In EP 310 188 there is a horizontal pipe section with a downward branch pipe. There is a baffle precisely above the downward branch pipe. Condensation in the flue gases fed through the horizontal pipe deposits on the vertical baffle and then drips into the branch pipe.

Systems are also known where a condensation collection tray is provided at the bottom of a vertical pipe section and a connection for a horizontal pipe is provided just above said tray. The flue gases are fed via the horizontal pipe and condensation deposited on the wall of the vertical pipe is collected in the collection tray. Siphon-like constructions are also known in this connection.

Furthermore, it is known to provide a widened zone in a vertical pipe section with a condensation collector therein. The flue gases are then fed upwards through the vertical pipe section from below and collection of condensation that has originated from the pipe section located above the widened section then takes place at the widening. The concept here is then that the condensation flowing downwards along the upper section of the pipe continues to follow the widened wall at the widening and can be fed along the widened wall into a collection tray. The lower pipe section then has its outflow orifice higher than the collection tray. With this arrangement it is known to close off the lower pipe section, along which the flue gases are fed, at the top and to provide it with lateral outflow openings for the flue gases.

Said systems for collecting condensation have the significant disadvantages that they add an additional flow resistance to the system and also that the collection of the condensation is incomplete.

The problem of refluxing condensation, in particular condensation refluxing from stainless steel or plastic flue systems, is the low acidity. This acidity is low because no reduction in H⁺ ions takes place as a consequence of the lack of the formation of a distinct oxide skin. This acidic condensed water gives rise to problems in the boiler, such as in the case of aluminium components thereof. In the case of aluminium components there is intensified formation of oxidation, which proceeds more rapidly than the customary oxide skin to be formed when aluminium oxide is formed. Holes can thus be produced in the aluminium. This is in particular a major problem in the case of the heat exchanger made of aluminium.

The aim of the present invention is, now, to provide an improved condensation collection element that, on the one hand, has little influence on the flow resistance of the duct in which it is installed and, on the other hand, appreciably improves the collection of condensation.

According to the invention said aim is achieved by providing a condensation collection element for fitting in a vertical flue duct for combustion gases, which condensation collection element comprises a pipe-like part and at least three legs, wherein the condensation collection element, viewed in the axial direction, has an upstream side and a downstream side, wherein the pipe-like part has an external surface that tapers in the downstream direction and wherein the at least three legs are provided at the upstream end of the pipe-like part and extend from the upstream end in a radially outward direction and in the upstream direction.

Such a condensation collection element can be fitted in a vertical flue duct, the external surface of the tapering pipe-like part collecting condensation originating from above and guiding this away laterally, whilst the passages present between the adjacent feet allow the flue gases to pass through not only on the inside of the pipe-like part but also along the outside of the pipe-like part. In particular because the flue gases are also able to pass along the outside of the pipe-like part, as well as simply through the pipe-like part, the throughput of flue gases past this condensation collection element is appreciably less impeded.

To reinforce the feet and so as to be able to fit the condensation collection element more easily in a vertical pipe section, with this arrangement it is advantageous according to the invention if the upstream ends of the feet have a support ring. This support ring can, for example, bear on supporting ridges projecting into the flue duct.

So as to impede the passage of flue gases as little as possible it is furthermore advantageous according to the invention if the pipe-like part has an internal surface that tapers in the downstream direction. With this arrangement it is particularly advantageous if the internal and external surface of the pipe-like part are essentially parallel to one another. With a view to low production costs it is preferable according to the invention if the external surface and/or the internal surface of the pipe-like part are conical.

According to a further aspect, the invention relates to a flue duct for venting combustion gases, which flue duct comprises:
- a condensation collection element according to the invention;
- a lower pipe section that is provided at its top end with a lower widening;
- a lower pipe section that is provided at its top end with a lower widening with, all round the outside of said top end, a trough for condensation running all round said outside; and
- an upper pipe section that is provided at its bottom end with an upper widening
wherein the lower widening and the upper widening are coupled, or at least can be coupled, to give a duct widening for connecting the lower and upper pipe section together, wherein the diameter of the downstream end of the pipe-like part is smaller than the internal diameter of the upper pipe section, wherein the diameter of the upstream end of the pipe-like part is larger than the internal diameter of the upper pipe section and is also larger than the internal diameter of the lower pipe section
wherein the pipe-like part is accommodated, or at least can be accommodated, free with clearance in the upper widening, such that the passages formed between the legs allow the combustion gases to pass through so as to guide the combustion gases also along the outside of the pipe-like section.

Because the downstream end of the pipe-like part has a diameter smaller than the internal diameter of the upper pipe section, whilst the upstream end of the pipe-like part has a diameter that is larger than the internal diameter of the upper pipe section it is ensured that condensation that drips downwards along the upper pipe section and that leaves the upper pipe section at the widening at the bottom end of the upper pipe section is reliably collected. Because the diameter of the upstream end of the pipe-like part is larger than the internal diameter of the lower pipe section it is ensured that condensation collected by the pipe-like part is not able to drip into the lower pipe section. The clearance between the pipe-like part and the widening ensures that the combustion gases are able to pass not only through the inside of the pipe-like section but also along the outside, after they have arrived, via the passages between the legs, at the outside, viewed in the radial direction, of the condensation collection element.

Here duct widening is understood to be that section of the duct that has been widened. Here the duct widening thus comprises the lower widening (made at the top end of the lower pipe section) and also the upper widening (made at the bottom end of the upper pipe section).

It is also pointed out that the lower pipe section, the upper pipe section, the lower widening and the upper widening can be made as a whole, in which case the lower widening and upper widening are thus permanently coupled. However, according to the invention it is preferable if the lower and upper widening can be coupled, for example by pushing into one another. This is because this facilitates production, the assembly of such a flue duct and also the provision of the condensation collection element in the flue duct. It is also pointed out that it is even conceivable that the flue duct, that is to say the upper pipe section, the lower pipe section, the lower widening and the upper widening, together with the condensation collection element can be made as a one-piece whole, for example as a one-piece injection-moulded product. However, from the standpoint of production technology this will lead to a complex, and consequently expensive, product. For this reason it is preferable here to make several components that can be coupled to one another.

According to a further embodiment of the flue duct according to the invention the clearance (between the pipe-like part and the wall of the duct widening) is at least 2 mm, such as, for example, 3-4 mm or more, in the radial direction. Although a greater clearance is not precluded, for practical considerations the clearance in practice will be at most 10 mm.

According to another advantageous embodiment the clearance (between the pipe-like part and the wall of the duct widening) is at least 2 mm, such as, for example, 3-4 mm or somewhat more, when this is viewed perpendicularly to the pipe-like part. In this context it is pointed out that the clearance, viewed perpendicularly to the pipe-like part, and the clearance viewed in the radial direction can be converted to one another if several parameters are known, such as the angle of inclination of the external surface of the pipe-like part.

According to a further advantageous embodiment of the flue duct according to the invention the internal diameter of the upper pipe section is greater than or equal to the internal diameter of the lower pipe section. The reason for this is that the flow of the flue gases is reliably ensured in this way. So that the dynamic pressure in the flue duct downstream of the widening and upstream of the widening are approximately equal, with this arrangement it is preferable according to the invention if the internal diameter of the upper pipe section is essentially equal to the internal diameter of the lower pipe section.

In the case of the flue duct according to the invention it is furthermore advantageous if the legs bear in the trough, optionally via the upstream ends of the ring linking the legs.

In order to be able to discharge condensation collected in the trough, it is advantageous according to the invention if the trough is provided with a discharge opening for discharging collected condensation.

According to yet a further aspect, the present invention relates to a boiler for a heating system or hot water facility, in particular for domestic use, containing a flue duct according to the invention, wherein the flue duct extends vertically and wherein the boiler is of the type with a first heat exchanger and a further heat exchanger connected downstream for extracting heat from the combustion gases. With such boilers the flue gases are usually cooled to below the dew point in the further heat exchanger, as a result of which a large amount of condensation is formed. Incidentally, it is pointed out that the invention also relates to such a boiler with only one heat exchanger.

According to yet a further aspect the present invention relates to a building provided with a flue duct according to the invention, wherein the flue duct is oriented vertically.

The present invention will be explained in more detail below with reference to the drawing, which shows an illustrative embodiment of the invention. In the drawing:
Figure 1 shows a perspective, diagrammatic view of a condensation collection element according to the invention;
Figure 2 shows, diagrammatically, in section, a flue duct according to the invention; and
Figure 3 shows, highly diagrammatically, a boiler according to the invention.

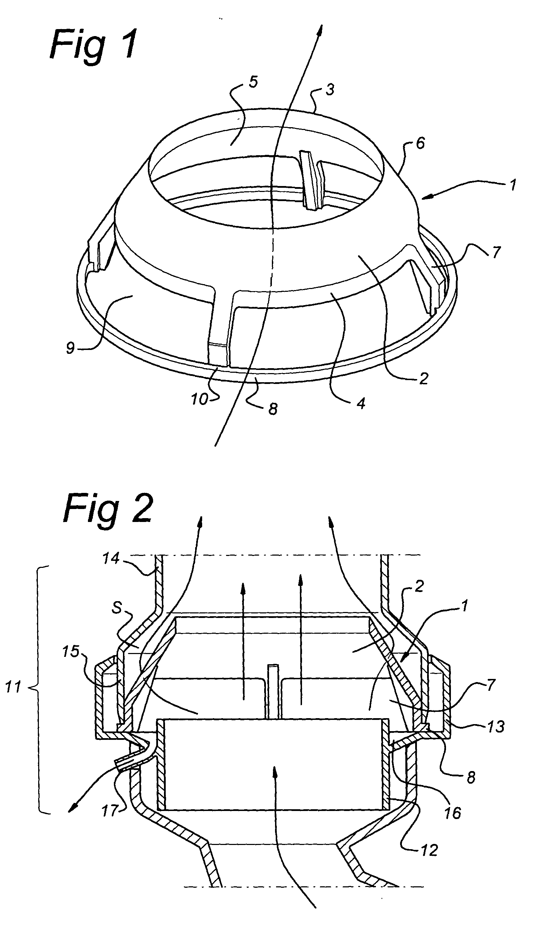

Fig. 1 shows a condensation collection element 1. This condensation collection element comprises a pipe-like part 2 and four legs 7 as well as a ring 8. It is pointed out that two legs 7 can also suffice, but that three legs 7 ensure good stability if positioned suitably. More than the four legs 7 shown are also conceivable. However, what is important is that the radial passages 9 between adjacent legs 7 are large so that combustion gases are able to pass through the passages 9 in the radially outward direction with as little hindrance as possible. The arrow shown in Figure 1 points in the downstream direction.

The pipe-like part 2 has an upstream rim 4 at the bottom and a downstream rim 3 at the top. The external surface 6 of the pipe-like part 2, viewed from the upstream rim 4, tapers towards the downstream rim 3. Preferably, this external surface 6 is conical. The same applies for the internal surface 5 of the pipe-like part 2.

The legs 7 are provided at the upstream end/the upstream rim 4 of the pipe-like part 2. From here the legs 7 extend both in the radial outward direction and in the upstream direction. At the upstream ends 10, the legs 7 have a support ring 8. This support ring reinforces the legs 7 and facilitates bearing of the condensation collection element 1 in the widening of a duct (as will also be discussed below).

Fig. 2 shows a flue duct 11 for venting combustion gases, also referred to as flue gases here. The flow pattern of the flue gases is indicated diagrammatically by means of arrows here. The arrows in Fig. 2 thus indicate that the downstream direction is the upward direction and that the upstream direction is the downward direction (opposite to the gas flow).

Here the flue duct 11 contains a condensation collection element 1, as shown in Fig. 1; an upper pipe section 14 that is provided at its bottom end with an upper widening 15; a lower pipe section 12 that is provided at its top end with a lower widening 13 with, all round the outside of the top end, a collection trough 16 for condensation that runs all round the outside of said top end. The lower widening 13 and the upper widening 15 have been pushed into one another so as together to form the duct widening 13, 15 and to connect the lower pipe section 12 and the upper pipe section 14 together.

It can also be seen in Fig. 2 that the diameter of the downstream/top end of the pipe-like part 2 is smaller than the internal diameter of the upper pipe section 14 and that the diameter of the upstream/bottom end of the pipe-like part 2 is larger than both the internal diameter of the upper pipe section 14 and the internal diameter of the lower pipe section 12.

It can also be seen in Figure 2 that the pipe-like part 2 is located free, with a clearance S, in the duct widening 13, 15, in particular inside the upper widening 15. It can also be seen that the clearance between the pipe-like part 2 and the upper widening 15 at the top/downstream end of the pipe-like part 2 is less than at the bottom/upstream end of the pipe-like part 2. On the outside of the pipe-like part 2 the clearance thus decreases in the downstream direction. This counteracts condensation droplets that are running along the external surface 6 of the pipe-like part 2 being pushed upwards along said external surface 6 by the flow of flue gas that is directed upwards and flowing over this surface. Should this nevertheless occur, these condensation droplets could then be pushed over the top/downstream rim of the pipe-like part 2 so that they then drop downwards and fall into the lower pipe section 12, which now precisely has to be counteracted.

A discharge for condensation collected in the trough 16 is also indicated by 17 in Fig. 2.

The support ring at the bottom of the legs 7 rests in the trough 16 and the bottom end of the upper widening 15 rests on the top surface of the ring 8.

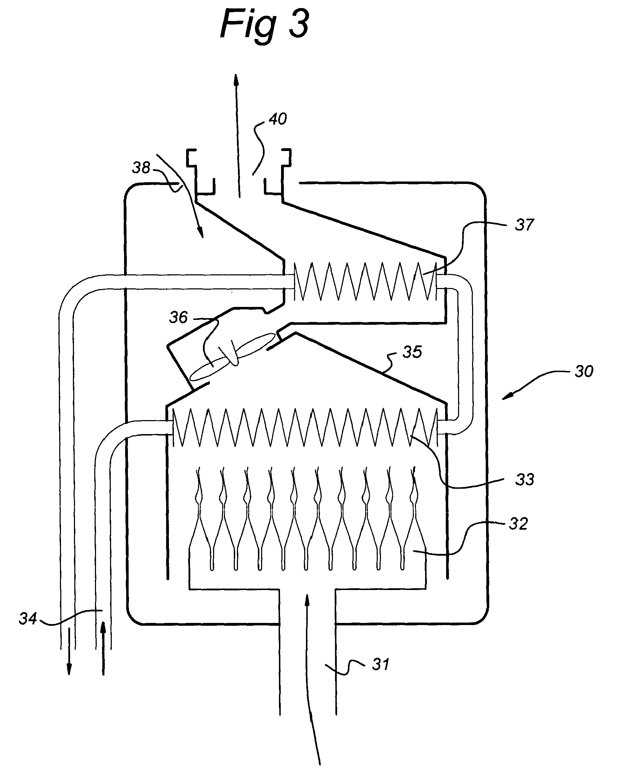

Fig. 3 shows, highly diagrammatically, a boiler according to the invention. This boiler is indicated in its entirety by 30. 31 is the supply of gas, natural gas, and 32 indicates the burner in which the gas is combusted. The heat generated during the combustion of the gas is fed past a first heat exchanger 33, through which central heating water supplied via 34 is flowing. At the top of the heat exchanger 33 a cap 35 is provided to which a ventilator 36 is connected for drawing in flue gases that have passed through the heat exchanger 33 and feeding these past a second heat exchanger 37. As is not uncommon with such installations, this ventilator 36 has a relatively low conveying height. The consequence of this is that high flow resistances are undesirable in the flue duct 40 connected to the boiler 30. Only the connection stub, or ― with reference to Fig. 2 ― the lower tube section, with the lower widening at the top end thereof and the trough for collecting condensed water, of the flue duct 40 is shown here. The feed opening via which combustion air is supplied is also indicated by 38.

With reference to Figs 3 and 2 it is pointed out that the external diameters of the lower pipe section 12 and upper pipe section 14 can be approximately 60 mm, whilst the external diameter of the duct widening can be approximately 80 mm. The flue ducts concerned are thus relatively compact flue ducts.

## Claims

1. Condensation collection element (1) for fitting in a vertical flue duct for combustion gases, comprising a pipe-like part (2) and at least three legs (7), wherein the condensation collection element (1), viewed in the axial direction, has an upstream side and a downstream side, wherein the pipe-like part (2) has an external surface (6) that tapers in the downstream direction and wherein the at least three legs (7) are provided at the upstream end (4) of the pipe-like part (2) and extend from the upstream end (4) in a radially outward direction and in the upstream direction.

2. Condensation collection element according to Claim 1, wherein the upstream ends (10) of the legs (7) have a support ring (8).

3. Condensation collection element according to one of the preceding claims, wherein the pipe-like part (2) has an internal surface (5) that tapers in the downstream direction.

4. Condensation collection element according to Claim 3, wherein the internal (5) and external (6) surface of the pipe-like part (2) are essentially parallel to one another.

5. Condensation collection element according to one of the preceding claims, wherein the external surface (6) and/or the internal surface (5) of the pipe-like part (2) are conical.

6. Flue duct (11) for venting combustion gases comprising:
• a condensation collection element (1) according to one of the preceding claims;
• a lower pipe section (12) that is provided at its top end with a lower widening (13) with, all round the outside of said top end, a trough (16) for condensation running all round the outside of said top end; and
• an upper pipe section (14) that is provided at its bottom end with an upper widening (15)
wherein the lower widening (13) and the upper widening (15) are coupled, or at least can be coupled, to give a duct widening for connecting the lower (12) and upper (14) pipe section together, wherein the diameter of the downstream end of the pipe-like part (2) is smaller than the internal diameter of the upper pipe section (14),
wherein the diameter of the upstream end of the pipe-like part (2) is larger than the internal diameter of the upper pipe section (14) and is also larger than the internal diameter of the lower pipe section (12), and
wherein the pipe-like part (2) is accommodated, or at least can be accommodated, free with clearance in the upper widening, such that the passages formed between the legs allow the combustion gases to pass through so as to guide the combustion gases also along the outside of the pipe-like section.

7. Flue duct according to Claim 6, wherein the clearance in the radial direction is at least 2 mm.

8. Flue duct according to one of Claims 6-7, wherein the clearance, viewed perpendicularly to the pipe-like part, is at least 2 mm.

9. Flue duct according to one of Claims 6-8, wherein the clearance between, on the one hand, the external surface (6) of the pipe-like part and, on the other hand, the internal surface of the wall of the flue duct decreases in the direction of flow.

10. Flue duct according to one of Claims 6-9, wherein the internal diameter of the upper pipe section is greater than or equal to the internal diameter of the lower pipe section.

11. Flue duct according to one of Claims 6-10, wherein the legs bear in the trough.

12. Flue duct according to one of Claims 6-11, wherein the trough is provided with a discharge opening for discharging collected condensation.

13. Boiler for a heating system or hot water facility, in particular for domestic use, containing a flue duct according to one of Claims 6-12, wherein the flue duct extends vertically and wherein the boiler is of the type with a first heat exchanger and a further heat exchanger connected downstream for extracting heat from the combustion gases.

14. Building provided with a flue duct according to one of Claims 6-12, wherein the flue duct is oriented vertically.
